# EUROPEAN PATENT APPLICATION

(11) **EP 3 626 988 A1**
(43) Date of publication of application: **25.03.2020**
(21) Application number: 19193951.1
(22) Date of filing: 27.08.2019
(51) Int. Cl.: F16D 13/71, F16D 13/48

(54) **VEHICLE CLUTCHES**

(30) Priority: 18.09.2018 GB 201815174
(71) Applicant: Raicam Clutch Limited, Milton Keynes Buckinghamshire MK9 1FF (GB)
(72) Inventor: Struve, Benjamin Chetwood, Kenilworth, Warwickshire CV8 2GN (GB); Child, David Stephen, Leamington Spa, Warwickshire CV33 9ST (GB)
(74) Representative: Morrall, Roger

(57) **Abstract**

A vehicle driveline clutch (10) has a flywheel (11) for connection with a rotatable first shaft (12), a pressure plate (13) rotatable with the flywheel for clamping one or more friction members (14), connectable with a rotatable second shaft (15), between the pressure plate (13) and flywheel (11) under the action of a diaphragm spring (16) to transmit drive between the first and second shafts, and actuator means (22, 23) for axial movement of a peripheral portion of the diaphragm spring (16) for disengagement/engagement of the clutch. The clutch is provided with cam means (20a, 21a) which on limited circumferential relative rotation between the flywheel (11) and pressure plate (13) in a first direction (X) increase the clamping force applied to the pressure plate (13) by the diaphragm spring (16).

## Description

This invention relates to vehicle clutches for use in vehicle drivelines.

There is significant interest currently in the provision of drivelines for use in hybrid vehicles which can be driven by both internal combustion engines and electric drive units. Such hybrid drivelines are problematical as they require careful packaging due to their space restrictions and operating conditions.

For example, in a so-called P2 hybrid, the internal combustion engine can power the vehicle on its own or in combination with the electric drive unit and the electric drive unit can also power the vehicle on its own. The internal combustion engine can also be used to power the electric drive unit to charge a battery which powers the electric power unit. Such drivelines are often packaged with the electric drive unit radially outboard of the drive clutch which limits the outside diameter of the clutch.

Such a driveline set up requires a driveline clutch which has a high torque capacity combined with good controllability at lower torques to facilitate combustion engine start up through clutch engagement while the driveline is being driven from the electric drive unit to prevent shock reversals of torque in the driveline. The high torque and high controllability characteristics are difficult to achieve given the limited space typically available.

It is an object of the present invention to provide a vehicle driveline clutch which is suitable for application in a hybrid vehicle driveline.

Thus according to the present invention there is provided a vehicle driveline clutch comprising a flywheel for connection with a rotatable first shaft, a pressure plate rotatable with the flywheel for clamping one or more friction members, connectable with a rotatable second shaft, between the pressure plate and flywheel under the action of a diaphragm spring to transmit drive between the first and second shafts, and actuator means for axial movement of a peripheral portion of the diaphragm spring for disengagement/engagement of the clutch, the clutch being characterised in that cam means are provided which on limited circumferential relative rotation between the flywheel and pressure plate in a first direction increase the clamping force applied to the pressure plate by the diaphragm spring.

Such a clutch can transmit more torque than would normally be possible for the diameter of clutch concerned due to the increased clamping force. This enables the clutch to be smaller in external diameter for a given torque capacity.

The cam means may also be operated on limited relative circumferential rotation between the flywheel and pressure plate in a second opposite direction to decrease the clamping force applied to the pressure plate by the diaphragm spring.

In one form of this clutch a cover may be mounted for rotation with the flywheel and the pressure plate may be supported from the cover for movement towards and away from the flywheel to clamp the friction member or members between the pressure plate and the flywheel, the cam means operating between the pressure plate and the flywheel/cover so that on the limited circumferential relative rotation between the pressure plate and the flywheel the pressure plate is cammed towards/away from the flywheel to increase/decrease the clamping force applied by diaphragm spring to the pressure plate.

Radially extending lugs on the pressure plate may extend into slots provided on the cover, the lugs and slots having angled contacting surfaces to generate the increase/decrease in the clamping force when the pressure plate makes its limited circumferential rotation relative to the flywheel.

Such an arrangement with its lower clamping force allows the rate of engagement of the clutch to be more carefully controlled by slipping thus avoiding shock loads in the driveline.

Spring means may act between the pressure plate and the cover to move the pressure plate circumferentially relative to the cover in the opposite direction to said first direction to ensure release of the clutch on disengaging movement of the actuator means.

The spring means may act between a first portion of the pressure plate which moves to increase the clamping force and a second portion of the pressure plate which is fixed circumferentially relative to the cover.

The spring means may comprise compression springs acting circumferentially and housed in pockets provided in the two portions of the pressure plate.

Alternatively the spring means may comprise compression springs located radially inboard of the portion of the pressure plate which contacts the friction member or members, the compression springs acting circumferentially between abutments carried by the pressure plate and a component which rotates with the cover respectively.

Low friction material may be located between the portions of the pressure plate or between the pressure plate and the component which rotates with the cover to facilitate the limited circumferential movement therebetween.

Lift straps may be provided which act between the pressure plate and cover to assist in moving the pressure plate away from the flywheel when the clutch is disengaged by the actuator means.

In the above arrangements the actuator means may encircle the second shaft and act on an inner peripheral portion of the diaphragm spring with an intermediate portion of the diaphragm spring being supported from the cover and an outer peripheral portion acting on the pressure plate.

In an alternative construction the flywheel is rotatable within an outer housing for connection with the second rotatable shaft and the pressure plate is carried on the first rotatable shaft with the cam means operating between the first rotatable shaft and the pressure plate.

In this construction the cam means may comprise interacting helical spline formations on a radially inner portion of the pressure plate and on the first shaft to generate the increase in clamping force.

The clutch may have two or more friction members may be connected with the outer housing and an interleaved friction member or members connected with the first rotatable shaft.

The members may slide axially relative to the outer housing via lugs on the friction members which slide in splines in the housing.

Damping springs may be provided acting between the lugs and splines to cushion lug impact on changes in the torque transmission through the clutch to alleviate lug rattle.

In this arrangement an inner annular portion of the outer housing containing the splines may be biased circumferentially relative to an outer portion of the housing to try to maintain contact between the splines in the inner portion of the housing and the lugs on torque changes to prevent spline rattle.

The actuator means may encircle the first shaft and act on an inner peripheral portion of the diaphragm spring with an intermediate portion of the diaphragm spring being supported against axial movement and an outer peripheral portion acting on the pressure plate.

The invention also provides a hybrid vehicle driveline including a clutch as described above for connecting drive between an internal combustion engine and an electric drive unit, the first shaft being connected with the internal combustion engine and the second shaft with the electric drive unit.

In this driveline a further drive clutch may be provided for connection of the internal combustion engine and electric drive unit to a transmission of the vehicle to propel the vehicle, this second clutch being used during drive off of the vehicle and during ratio changes in the transmission.

Two embodiments of the present invention will now be described, by way of example only, with reference to the accompanying drawings in which:-
Figure 1 shows a schematic section through a first form of vehicle clutch in accordance with the present invention;
Figures 2 and 3 shows diagrammatic views also in the direction of the arrow A of part of the pressure plate and cover of the clutch of Figure 1 with the flywheel and clutch rotating in a first drive direction;
Figures 4 and 5 show diagrammatic view in the direction of the arrow A of an alternative form of part of the pressure plate and cover of the clutch of Figure 1 with the flywheel and clutch rotating in a second opposite overrun direction;
Figure 6 shows part of Figure 1 on a larger scale to illustrate the release spring arrangement embedded in the pressure plate;
Figure 7 shows an alternative release spring arrangement located radially inward of the portion of the pressure plate which contacts the friction member;
Figure 8 shows a schematic section through a second form of vehicle clutch in accordance with the present invention;
Figure 9 shows diagrammatically how leaf type damping springs used to prevent spline rattle in the clutch of Figure 8;
Figure 10 shows diagrammatically an alternative form of damping spring arrangement for use in the clutch of Figure 8, and
Figure 11 show diagrammatically the driveline of a P2 type hybrid vehicle in which a clutch in accordance with the present invention is particularly useful.

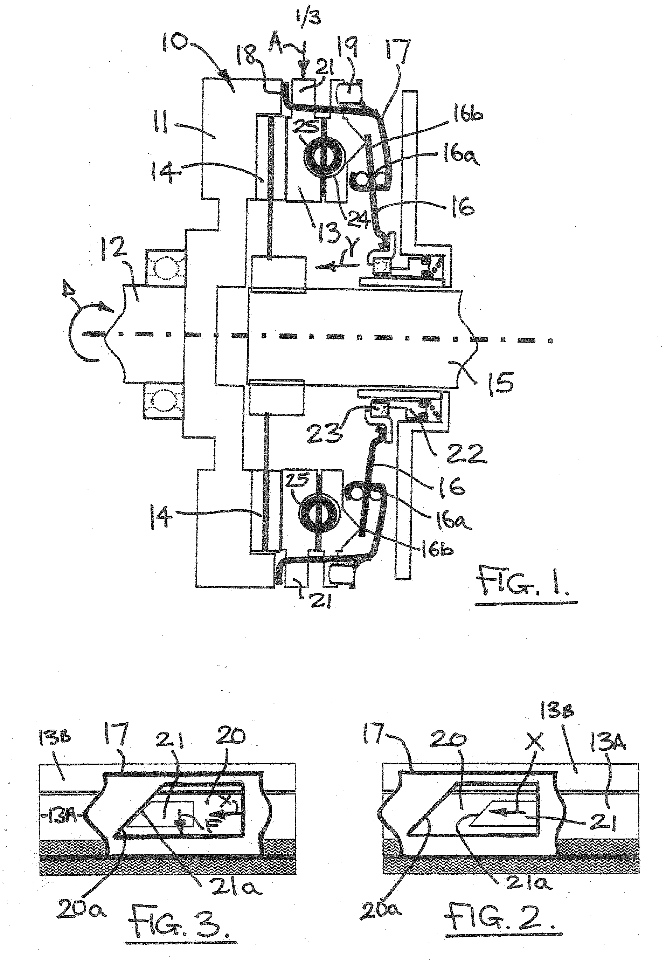

Referring to the drawings, a vehicle driveline clutch 10 has a flywheel 11 for connected with a rotatable first shaft 12 and a pressure plate 13 rotatable with the flywheel 11 for clamping one or more friction members 14, connected with a rotatable second shaft 15, between the pressure plate 13 and flywheel 11 under the action of a diaphragm spring 16 in order to transmit drive between the first 12 and second shafts 15. The pressure plate 13 is mounted on a cover 17 which is secured to the flywheel via an outer flange 18 using rivets or bolts not visible in the section of Figure 1. Known lift straps 19 secure the pressure plate 13 to the cover 17 and assist in moving the pressure plate away from the flywheel during clutch disengagement.

The cover has a number of circumferential spaced slots 20 (see Figures 2 and 3) into which radially extending lugs 21 on the pressure plate 13 extend. The lugs 21 and slots 20 have angled contact surfaces 21a and 20a respectively which act as cam means to generate an increase F in the clamping force applied to the friction member 14 by a diaphragm spring 16 when the pressure plate 13 has made a limited circumferential rotation in a first direction X relative to the flywheel 11. This relative circumferential movement in direction X occurs as a result of the frictional drag imposed on the pressure plate 13 when the flywheel 11 is being driven in the forward drive direction D of the vehicle.

The hydraulic slave actuator 22 encircles the shaft 15 and when pressurised displaces the clutch release bearing 23 In direction Y in the known manner. The intermediate portion of the diaphragm spring 16 is mounted on cover 17 at 16a so that the movement of the release bearing 23 in the direction Y moves the inner periphery of diaphragm spring 16 and thus reduces the contact pressure of the outer periphery of the fingers 16b of the diaphragm spring 16 on pressure plate 13 to reduce the clamp pressure and thus disengage the clutch. The slave actuator 22 is operated by a connected hydraulic master cylinder (not shown) which may be manually operated by the vehicle driver via, for example a clutch pedal and/or may be operate electrically via an electronic clutch control system (not shown).

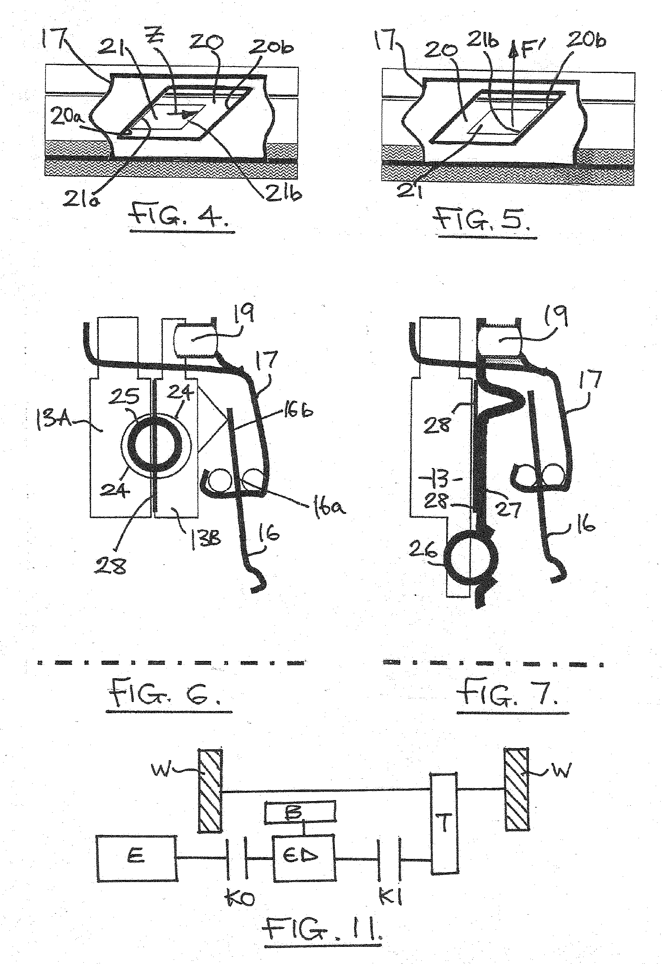

In an alternative design, as shown in figures 4 and 5, the slots 20 and lugs 21 may each be provided with second angled contact surfaces 20b and 21b respectively which act as a further cam means to generate a decrease in the clamping force F' tending to reduce the clamping force applied to the friction member 14 by the actuator 22. This reduction in the clamping force generated by the pressure plate again occurs when the pressure plate makes a limited circumferential rotation in a second opposite direction Z relative to the flywheel 11. This relative circumferential movement in direction Z occurs as a result of the frictional drag imposed on the pressure plate 13 when the flywheel 11 is being driven in the overrun forward drive direction D of the vehicle by the wheels of the vehicle acting on shaft 15.

As shown in Figures 1 and 6 the pressure plate 13 is in fact in two annular portions. A first portion 13A contacts the friction member 14 and carries the lugs 21 and a second portion 13B against which the diaphragm spring 16 acts. Housed in pockets 24 in portions 13A and 13B of the pressure plate are compression release springs 25 which tend to move the section 13A of the pressure plate in the opposite direction to direction X to ensure release of the clutch on disengaging movement of the actuator 22.

In an alternative release spring arrangement shown In Figure 7 the spring means to assist in releasing the clutch on disengaging movement of the actuator 22 comprises compression springs 26 which act circumferentially between a single piece pressure plate 13 and a sheet metal component 27 which rotates with the cover 17, the springs 26 being located radially inboard of the portion of the pressure plate which contacts the friction member 14.

A low friction material layer 28 is located between the components which rotate relative to each other in Figures 6 and 7 under the action of springs 25 and 26 to reduce friction between these components and thus facilitate the operation of these springs.

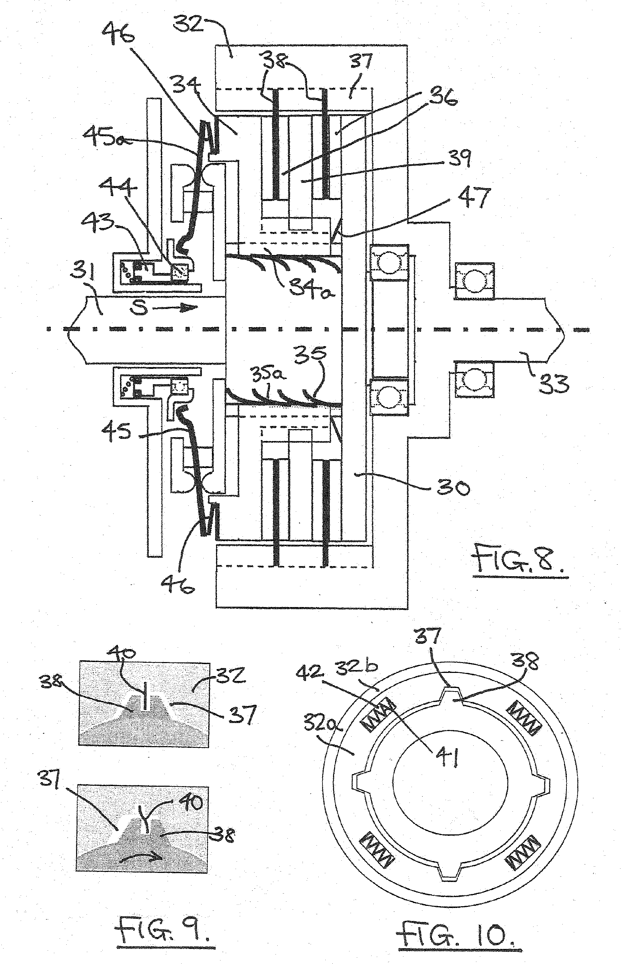

Figure 8 shows a second embodiment of the present invention in which a flywheel 30 is rotatable by a first shaft 31 within an outer housing 32 connected with a second rotatable shaft 33 and a pressure plate 34 is carried on the first rotatable shaft 31 with the cam means 35 operating between the first rotatable shaft and the pressure plate. The cam means comprises interacting helical spline formations on a radially inner portion 34a of the pressure plate and on a portion 35a the first shaft to generate an increase in clamping force as the pressure plate 34 makes its limited circumferential rotation relative to flywheel 30 when the clutch is engaged.

In this arrangement the clutch has two friction members 36 which are connected with the outer housing 32 via lugs 38 on the friction members which slide in splines 37 in the outer housing 32. An interleaved friction member 39 is splined onto the shaft 31 via the pressure plate sleeve 34a.

To alleviate rattle between the lugs 38 and the splines 37 leaf springs 40 (see Figure 9) are provide in lugs 38 to cushion the impact of the lugs 38 on the splines 37 when changes in the torque transmission through the clutch occur to alleviate lug rattle.

In an alternative anti rattle arrangement shown in Figure 10 the housing 32 is in two portions, an inner annular portion 32a containing the splines 37 and an outer housing portion 32b. The inner housing portion 32a is circumferentially biased by compression springs 41 housed in pockets 42 in the inner and outer housing portions. The springs 41 again cushion impact between the splines 37 in the inner portion 32a of the housing and the lugs 38 on torque changes within the clutch to prevent spline rattle.

The actuator means for this arrangement comprises an hydraulic slave actuator 43 which encircles the shaft 31 and which when pressurised displaces the clutch thrust bearing 44 In direction S in the known manner to move the inner periphery of diaphragm spring 45 and thus reducing the contact pressure of the outer periphery of the fingers 45a of the diaphragm spring 45 on pressure plate 34 to reduce the clamp pressure and this disengage the clutch. The slave actuator 43 is operated by a connected master cylinder (not shown) which may be manually operated by the vehicle driver via, for example a clutch pedal and/or may be operate electrically via an electronic clutch control system (not shown).

In the example shown in Figure 8 the fingers 45a of the diaphragm spring act on the pressure plate 34 via a belleville spring 46 which provides additional resilience in the spring loading of the pressure plate to cushion or soften the engagement of the clutch. The release of the clutch is assisted by a Belleville spring 47 which acts in the release direction on the inner periphery of the pressure plate 34.

Figure 11 show diagrammatically the driveline of a P2 type hybrid vehicle in which a clutch in accordance with the present invention is used as clutch K0. In this driveline an internal combustion engine E drives an electric drive unit ED which can be powered by a battery B and which in turn drives a transmission T via a further clutch K1. Clutch K1 may be manually and/or electronically controlled and used for driving off from rest or changing ratios in the transmission whilst on the move. Clutch K0 connects the internal combustion engine and the electric drive unit with, for example shaft 12 of Figure 1 connected with engine E and shaft 15 connected with the electric drive unit ED.

In this drive line clutch KO can be closed to allow engine E to charge the electric drive unit ED and if clutch K1 is also closed this allows engine E and electric drive unit ED to drive the vehicle via transmission T. If only clutch K1 is closed the vehicle can be driven by the electric drive unit ED alone.

Sometimes when the vehicle is being driven only by the electric drive unit ED it is necessary to connect the engine E to the unit ED by closing clutch K0 as the battery is getting low. This engagement of the clutch K0 can be problematical as it can cause a large reversal of the torque in the driveline since the speed at which the driveline is currently being driven may not correspond to the speed at which the engine E is rotating. It is therefore necessary to have good control of the engagement of the clutch K0 to avoid driveline shocks and possible driveline damage. The ability of the clutch shown in Figures 1 and 4 and 5 to reduce the clamping effect of the actuator enables the rise in the clamping force of the clutch to be more gradual and controlled thus avoiding shock loads. Also, the ability of the clutch to increase clamp load using the cam means shown in Figures 2 and 3 (also included in Figures 4 and 5) enables the overall clamping effect of the actuator to be increased thus allowing the transmission of higher torque through the clutch. This allows smaller clutch diameters to be used which can be particularly important in hybrid drives in which mechanical drives are frequently housed radially inside the electric drive unit.

Although the clutch design of the present invention is particularly suitable for use in hybrid vehicle drivelines, due to the cam effect discussed above and its capability to generate higher or lower clamping loads, the clutch has other non-hybrid driveline applications. For example, the ability to provide higher clamp loads than the clutch actuator alone can provide means that the release force required to disengage a clutch of a given torque capacity can be reduced as the vehicle operator does not have to overcome all the clamping load when disengaging the clutch as a significant proportion of the clamping force can be generated by the cam means of the clutch of the present invention.

## Claims

1. A vehicle driveline clutch (10) comprising a flywheel (11) for connection with a rotatable first shaft (12), a pressure plate (13) rotatable with the flywheel for clamping one or more friction members (14), connectable with a rotatable second shaft (15), between the pressure plate (13) and flywheel (11) under the action of a diaphragm spring (16) to transmit drive between the first and second shafts, and actuator means (22, 23) for axial movement of a peripheral portion of the diaphragm spring (16) for disengagement/engagement of the clutch, the clutch being **characterised in that** cam means (20a, 21a) are provided which on limited circumferential relative rotation between the flywheel (11) and pressure plate (13) in a first direction (X) increase the clamping force applied to the pressure plate (13) by the diaphragm spring (16).

2. A clutch according to claim 1 in which the cam means (20b, 21b) is also arranged on limited relative circumferential rotation between the flywheel (11) and pressure plate (13) in a second opposite direction (Z) to decrease the clamping force applied by the pressure plate.

3. A clutch according to claim 1 or 2 in which a cover (17) is mounted for rotation with the flywheel (11) and the pressure plate (13) is supported from the cover for movement towards and away from the flywheel to clamp the friction member or members (14) between the pressure plate and the flywheel, the cam means (20a, 21a, 20b, 21b) operating between the pressure plate and the flywheel/cover so that on the limited circumferential relative rotation (X, Z) between the pressure plate and the flywheel the pressure plate is cammed towards/away from the flywheel to increase/decrease the clamping force applied by the diaphragm spring (16) to the pressure plate (13).

4. A clutch according to claim 3 in which radially extending lugs (21) on the pressure plate (13) extend into slots (20) provided on the cover (17), the lugs and slots having angled contacting surfaces (20a, 21ab, 20b, 21b) to generate the increase/decrease in the clamping force when the pressure plate (13) makes its limited circumferential rotation relative to the flywheel.

5. A clutch according to claim 3 or 4 in which spring means (25) act between the pressure plate (13) and the cover (17) to move the pressure plate circumferentially relative to the cover in the opposite direction (Z) to said first direction (X) to ensure release of the clutch on disengaging movement of the actuator means (22, 23).

6. A clutch according to claim 5 in which the spring means (25) acts between a first portion (13A) of the pressure plate which moves to increase the clamping force and a second portion (13B) of the pressure plate which is fixed circumferentially relative to the cover (17.

7. A clutch according to claim 6 in which the spring means comprises compression springs (25) acting circumferentially and housed in pockets (24) provided in the two portions (13A, 13B) of the pressure plate.

8. A clutch according to claim 6 in which the spring means comprises compression springs (26) located radially inboard of the portion of the pressure plate (13) which contacts the friction member or members (14), the compression springs (26) acting circumferentially between abutments carried by the pressure plate and a component (27) which rotates with the cover (17) respectively.

9. A clutch according to any one of claims 1 to 8 in which the actuator means (22, 23) encircles the second shaft (15) and acts on an inner peripheral portion of the diaphragm spring (16) with an intermediate portion 16a) of the diaphragm spring being supported from the cover (17) and an outer peripheral portion (16b) acting on the pressure plate (13).

10. A clutch according to claim 1 in which the flywheel (30) is rotatable within an outer housing (32) for connection with the second rotatable shaft (33) and the pressure plate (34) is carried on the first rotatable shaft (31) with the cam means (35) operating between the first rotatable shaft (31) and the pressure plate (34).

11. A clutch according to claim 10 in which the cam means (35) comprises interacting helical spline formations (34a, 35a) on a radially inner portion of the pressure plate (34) and on the first shaft (31) to generate the increase in clamping force.

12. A clutch according to claims 10 and 11 having two or more friction members (36) connected with the outer housing (32) and an interleaved friction member or members (39) connected with the first rotatable shaft (31).

13. A clutch according to claim 12 in which the friction members (36) slide axially relative to the outer housing (32) via lugs (38) on the friction members which slide in splines (37) in the housing and damping springs (40) are provided acting between the lugs (38) and splines (37) to cushion lug impact on changes in the torque transmission through the clutch to alleviate lug rattle.

14. A clutch according to claim 13 in which an inner annular portion (32a) of the outer housing containing the splines is biased (41, 42) circumferentially relative to an outer portion (32b) of the housing to try to maintain contact between the splines (37) in the inner portion of the housing and the lugs (38) on torque changes to prevent spline rattle.

15. A clutch according to any one of claims 10 to 14 in which the actuator means ((43, 44) encircles the first shaft (31) and acts on an inner peripheral portion of the diaphragm spring (45) with an intermediate portion of the diaphragm spring being supported against axial movement and an outer peripheral portion (45a) acting on the pressure plate (34).

16. A hybrid vehicle driveline including a clutch (KO) according to any one of claims 1 to 15 for connecting drive between an internal combustion engine (E) and an electric drive unit (ED), the first shaft (12) being connected with the internal combustion engine and the second shaft (15) with the electric drive unit, and a further drive clutch (K1) is provided for connection of the internal combustion engine (E) and electric drive unit (ED) to a transmission (T) of the vehicle to propel the vehicle, this second clutch being used during drive off of the vehicle and during ratio changes in the transmission.
